# EUROPEAN PATENT SPECIFICATION

(11) **EP 2 130 882 B1**
(45) Date of publication and mention of the grant of the patent: **12.01.2011**
(21) Application number: 08157422.0
(22) Date of filing: 02.06.2008
(51) Int. Cl.: C09D 177/02

(54) **Lacquer or paint**
Lack oder Farbe
Laque ou peinture

(43) Date of publication of application: 09.12.2009
(73) Proprietor: Deceuninck NV, 8830 Hooglede-Gits (BE)
(72) Inventor: Grymonprez, Wim Maurits Ivo, B-8800 Roeselare (BE); Tallaire, Francky, B-8890 Dadizele (BE); Michel, Philippe, 01160 St. Martin de Mont (FR); Gouy, Jean Jacques, 43200 Bessamorel (FR); Bichet, Pascale, 69001 Lyon (FR); Delorme, Robert, 69960 Corbas (FR)
(74) Representative: Mooij, Johannes Jacobus

(56) References cited:
- DE-A1- 10 233 344
- DATABASE CAPLUS CHEMICAL ABSTRACTS SERVICE, COLUMBUS, OHIO, US; Lakokrasochnye Materialy i Ikh Primenenie (1978) 12 May 1984 (1984-05-12), V. I. KURACHENKOV, ET AL: "Effect of powdered polyamide paint granulometry and thickness on coating thickness spray-coated layer" XP002504573
- DATABASE CAPLUS CHEMICAL ABSTRACTS SERVICE, COLUMBUS, OHIO, US; Lakokrasochyne Materialy i Ikh Primenenie, (2) 24 June 1988 (1988-06-24), I.F. UTKINS: "Polyamide coatings obtained by electrodeposition" XP002504574

## Description

The invention relates to a lacquer or paint and in particular to a lacquer or paint for plastic profiles and in particular window and door profiles. Unless paint and lacquer are mentioned together, a reference to paint in this application refers to paint and lacquer.

Paints for window and door profiles typically are weather proof and abrasion resistant. A suitable paint for windows and door profiles is known from EP0653248. EP0653248 describes a paint based on PU, which further comprises a polyamide (PA) filler to create an abrasion resistant surface.

DE-A-102 33 344 discloses a whirl sinter process with polyamide particles, whilst V.I. KURACHENKOV, ET AL (Lakokrasochyne Materialy i lkh Primenenie (1978) 12 May 1984, CHEMICAL ABSTRACTS) discloses a process comprising melting of a layer of powdered plastic on a metal surface and I.F. UTKINS (Lakokrasochyne Materialy i lkh Primenenie, (2) 24 June 1988, CHEMICAL ABSTRACTS) discloses a coating that is cured by first drying the coating at 90 degrees for 10-15 mins. and then fusion at 280 degrees for 2 mins.

In order to reduce the viscosity and allow the paint to be applied by a spraying pistol, it can be useful to dilute the PU with solvents. However due to environmental requirements, organic solvents should be reduced as much as possible to reduce the amount of Volatile Organic Compounds (VOC). Water based UV curing emulsions of PU in water are well known in the art. They are e.g. known from celliose.

A disadvantage of compositions of water based UV hardening paints with a PA powder is that the gloss generally is very low.

It is an object of the invention to provide a locquer a paint with abrasion resistance, gloss and weather resistance.

This object is achieved by means of a coater based UV curing lacquer or paint according to claim 1.

Locquer or paint according to the invention provides abrasion resistance, gloss and weather resistance.

Locquer or paint according to the invention comprises between 3 and 10 wt% of PA 12 beads with a diameter of between 25 and 60 µm.

When the amount of polyamide (PA) 12 beads in the paint is less than 3 wt%, the abrasion resistance is insufficient, while paint with more than 12 wt% of PA12 lacks surface gloss. Preferably the amount of PA 12 in the paint is between 4 and 6 wt%.

PA12 beads with a particle diameter of below 25 µm lack abrasion resistance, while paint with PA12 particles with a diameter of more than 60 µm causes a rough surface. Preferably the diameter of the PA12 beads is between 35 and 45 µm.

The best combination of gloss and abrasion resistance is obtained with PA12 particles with a substantially round particle shape and diameter of about 40 µm, wherein the amount of particles with a diameter below 20 µm is less than 5% and the amount of particles with a diameter of more than 60 µm is less than 5%.

The invention further relates to a method for coating a substrate, the method comprising
a. applying a water based UV curing lacquer or paint onto the substrate,
b. drying the locquer or paint on the substrate,
c. curing the lacquer or paint by subjecting the dried paint to radiation,
**characterised in that** the lacquer or paint comprises between 3 and 10 wt% of PA12 beads with a diameter of between 25 and 60 µm.

Preferably the substrate is cleaned before spraying. Cleaning can be done by sanding, corona treatment, flaming, washing with water or lower alcohols.

In the method of the invention a water based UV curing locquer or paint is applied onto the substrate. This can be done by spraying. Preferably the paint is sprayed onto the substrate by means of a spraying pistol. Preferably, this method is automated, the paint being sprayed onto the section surfaces in an automated spray unit, while the sections are passed through said spray unit on an automatic conveying system. As a result of continuous spraying, the visual appearance of the coloured surfaces is more uniform than is the case for manual treatment.

Cleaning and degreasing of the sections is preferably effected by these being
a) warm-rinsed and brushed with a solution of an oxidant or cleaning agent (for example an aqueous solution of sodium hypochlorite),
b) warm-rinsed,
c) dried,
d) subjected to UV irradiation,
e) treated with a non-chlorinated solvent which is suitable for the type of plastic in question.

This treatment too can readily be automated, for example by providing an automatic conveying means on which the sections are passed past the various appliances (for rinsing, brushing, drying, UV irradiation).

The UV irradiation and the subsequent treatment with a non-chlorinated solvent can be repeated a number of times if required.

After the paint is applied onto the substrate, the paint is dried. Preferably the water is evaporated by subjecting the substrate to a heat source. Suitable heat sources are microwave, infrared (IR) light or ultra high frequency radiation. Preferably the paint is subjected to an IR light source.

After drying, the paint is cured by subjecting the paint to radiation. Suitable radiation sources are an electron beam or an UV lamp. Preferably the paint is cured with an UV lamp. Suitable UV sources are either Mercury or Gallium lamps.

The invention further relates to a shaped part coated with the cured lacquer or paint of the invention and in particular to a window profile, a door profile, a window or a door.

### Example 1

A water based UV curing paint (7028LT/C'Plast UV Hydro RAL 1013/1 of Celliose) was mixed with 5wt% of PA12 beads with an average particle diameter of 40 J µm (Orgasol 2002 ES4Nat3 of Arkema).
A PVC substrate was cleaned and degreased with 7000KX (Celliose).

The paint was then sprayed onto the cleaned PVC substrate with a pistol and dried during 10 seconds with a IR lamp. Subsequently the paint was subjected during 2 sec to the light of two 120 W/cm UV lamps.

The gloss of the cured paint, measured according to ASTM D-523-89 was 36 points under an angle of 60 degrees.

### Example 2

Example 1 was repeated, but instead of paint 7028LT/C'Plast UV Hydro RAL 1013/1, the PA 12 was added to 721LX/C'Plast UV Hydro RAL 7016/1 paint. The gloss of the cured paint, measured according to ASTM D-523-89 was 32 points under an angle of 60 degrees.

### Comparative experiment A

Example 1 was repeated, but instead of PA 12 a similar amount of PA11 (Rilsan® of Arkema Inc.) was added to 72ILX/C'Plast UV Hydro RAL 7016/1. The gloss of the cured paint, measured according to ASTM D-523-89 under an angle of 60 degrees was 4 points.

### Comparative experiment B

A coating of 4567LU/C'Plast 5700 AG RAL 1013 was sprayed on a PVC substrate that was cleaned according to the procedure described under Example 1. This 2 K polyurethane paint was cured during 2 hours 50°C. The gloss of the cured paint, measured according to ASTM D-523-89 was 30 points under an angle of 60 degrees.

### Example 3 and Comparative experiment C

Samples of Examples 1 and 2 and Comparative experiments A and B were subjected to a Weatherometer test according to EN310 during 1000 hours.
The results in terms of Delta E values in table 1 indicate that a paint with PA12 has a similar weatherability than a paint with PA11.

**Table 1.**

| Sample | Delta E | Delta E | Delta E | Average Delta E |
|---|---|---|---|---|
| 1 | 0.69 | 1.09 | 0.40 | 0.73 |
| 2 | 0.31 | 0.38 | 0.96 | 0.55 |
| A | 0.29 | 0.26 | 0.26 | 0.27 |
| B | 0.84 | 0.60 | 0.75 | 0.73 |

These results further show that there is no difference in wheatherability between paints based on 2K polyurethane and water based UV curable compositions. Also the use of PA 12 or PA11 has no influence on the weatherability. It is however PA 12 that gives a significant higher level of gloss than PA11 in a water based UV hardening paint.

## Claims

1. Water based UV curing lacquer or paint **characterised in that** the lacquer or paint comprises between 3 and 10 wt% of polyamide 12 beads with a diameter of between 25 and 60 µm.

2. Lacquer or paint according to claim 1, wherein the diameter of the polyamide 12 beads is between 35 and 45 µm.

3. Lacquer or paint according to claim 1, wherein the diameter of the polyamide 12 beads is about 40 µm.

4. Method for coating a substrate, the method comprising
a. spraying the substrate with a water based UV curing lacquer or paint,
b. drying the lacquer or paint on the sprayed substrate,
c. curing the lacquer or paint by exposing the dried lacquer or paint to radiation,
**characterised in that** the lacquer or paint is a water based UV curing laquer or paint according to claim 1.

5. Shaped part coated with the cured lacquer or paint of claim 1.

6. Shaped part according to claim 5, wherein the shaped part is a window profile, a door profile, a window or a door.

## Patentansprüche

1. UV-härtender Lack oder Farbe auf Wasserbasis, **dadurch gekennzeichnet, dass** der Lack oder die Farbe zwischen 3 und 10 Gew.-% Polyamid 12 Perlen mit einem Durchmesser zwischen 25 und 60 µm umfasst.

2. Lack oder Farbe nach Anspruch 1, worin der Durchmesser der Polyamid 12 Perlen zwischen 35 und 45 µm liegt.

3. Lack oder Farbe nach Anspruch 1, worin der Durchmesser der Polyamid 12 Perlen etwa 40 µm ist.

4. Verfahren zum Überziehen eines Substrats, das Verfahren umfasst
a. Sprühen des Substrats mit einem UV-härtenden Lack oder Farbe auf Wasserbasis,
b. Trocknen des Lacks oder der Farbe auf dem besprühten Substrat,
c. Aushärten des Lacks oder der Farbe durch Aussetzen des getrockneten Lacks oder der Farbe einer Strahlung,
**dadurch gekennzeichnet, dass** der Lack oder die Farbe ein UV-härtender Lack oder Farbe auf Wasserbasis nach Anspruch 1 ist.

5. Formteil, das mit dem UV-härtenden Lack oder Farbe nach Anspruch 1 überzogen ist.

6. Formteil nach Anspruch 5, worin das Formteil ein Fensterprofil, ein Türprofil, ein Fenster oder eine Tür ist.

## Revendications

1. Laque ou peinture à l'eau polymérisant aux UV **caractérisée en ce que** la laque ou la peinture comprend entre 3 et 10 % en poids de perles de polyamide 12 d'un diamètre situé entre 25 et 60 µm

2. Laque ou peinture selon la revendication 1, dans laquelle le diamètre des perles de polyamide 12 est situé entre 35 et 45 µm

3. Laque ou peinture selon la revendication 1, dans laquelle le diamètre des perles de polyamide 12 est d'environ 40 µm.

4. Procédé pour revêtir un substrat, le procédé consistant :
a. à pulvériser sur le substrat une laque ou peinture à l'eau polymérisant aux UV ;
b. à faire sécher la laque ou peinture sur le substrat pulvérisé ;
c. à polymériser la laque ou peinture en exposant la laque ou peinture séchée à un rayonnement,
**caractérisé en ce que** la laque ou peinture est une laque ou peinture à l'eau polymérisant aux UV selon la revendication 1.

5. Pièce profilée revêtue de la laque ou de la peinture polymérisée selon la revendication 1.

6. Pièce profilée selon la revendication 5, étant entendu que la pièce profilée est un profil de fenêtre, un profil de porte, une fenêtre ou une porte.
